# EUROPEAN PATENT APPLICATION

(11) **EP 3 892 531 A1**
(43) Date of publication of application: **13.10.2021**
(21) Application number: 19908903.8
(22) Date of filing: 10.01.2019
(51) Int. Cl.: B63J 3/04, B63J 3/02, B63J 99/00

(54) **MARINE POWER SUPPLY SYSTEM, VESSEL EQUIPPED WITH SAME, MARINE POWER SUPPLY SYSTEM CONTROL METHOD, AND MARINE POWER SUPPLY SYSTEM CONTROL PROGRAM**

(71) Applicant: Mitsubishi Heavy Industries Marine Machinery & Equipment Co., Ltd., Nagasaki-shi Nagasaki 8508610 (JP)
(72) Inventor: KAWANAMI Akira, Nagasaki-shi, Nagasaki 850-8610 (JP); SHIRAISHI Keiichi, Nagasaki-shi, Nagasaki 850-8610 (JP); IMAMORI Yusuke, Tokyo 100-8332 (JP); SAKAMOTO Musashi, Tokyo 100-8332 (JP)
(74) Representative: Hoffmann Eitle
(86) International application number: PCT/JP2019/000456
(87) International publication number: WO 2020/144792

(57) **Abstract**

The purpose of the present invention is to provide a marine power supply system which comprises a diesel generator, an Organic Rankine Cycle system, and a secondary battery and runs the diesel generator under high load and to provide a vessel equipped with the marine power supply system, a marine power supply system control method, and a marine power supply system control program. Provided is a marine power supply system (1) having a control system (9) which performs control for combining a diesel generator (10), an ORC system (2), and a secondary battery (20) in order to meet ship power demand, wherein the diesel generator (10) has a load factor in the range of 60-90% with respect to the average ship power demand, the control system (9) performs control so that the secondary battery (20) is charged with surplus power if the ship power demand does not exceed the total output of the diesel generator (10) and the ORC system (2) and performs control so that the power stored in the secondary battery (20) is discharged if the ship power demand exceeds the total output of the diesel generator (10) and the ORC system (2).

## Description

### Technical Field

The present invention relates to a marine power supply system, a vessel equipped with the same, a marine power supply system control method, and a marine power supply system control program.

### Background Art

In vessels, various methods have been studied to cover an onboard power load.

For example, Patent Document 1 discloses that the power generated by a power turbine is stored and the stored power is used in a case where the onboard load increases.

Additionally, Patent Document 2 discloses that the power generated by a generator coaxial with a turbocharger provided on a vessel is stored and the stored power is used in a case where the onboard load increases.

Meanwhile, Patent Document 3 discloses an organic Rankine cycle system that performs power generation using an organic heat medium, which has exchanged heat with jacket water that has cooled a propelling main engine, as a heat source.

Additionally, Patent Document 4 discloses that an onboard load is covered by the power generated by a generator coaxial with a turbocharger provided on a vessel, some of the power is stored in a secondary battery, and power is supplied from the secondary battery until a diesel power generation facility used at the time of emergency stop starts power generation.

### Citation List

### Patent Literature

[PTL 1] Japanese Unexamined Patent Application Publication No. 2009-137383
[PTL 2] Japanese Unexamined Patent Application Publication No. 2011-256827
[PTL 3] Japanese Unexamined Patent Application Publication No. 2016-142223
[PTL 4] Japanese Patent No. 5804728

### Summary of Invention

### Technical Problem

However, in each of the inventions disclosed in the above Patent Documents 1, 2, and 4, the diesel generator is an emergency generator provided for performing power generation, for example, in a case where a main engine is stopped. In each of the inventions disclosed in the above Patent Documents 1, 2, and 4, the load factor of the diesel generator has not been studied. Therefore, there is a problem that the fuel consumption efficiency of the diesel generator is poor depending on situations.

Even when the invention disclosed in Patent Document 3 is applied to the inventions disclosed in Patent Documents 1, 2, and 4, the same problem is present.

In the invention disclosed in Patent Document 4, it is conceivable to use the secondary battery to level fluctuations in the load of the diesel generator in order to achieve the high efficiency of the diesel generator and improve the fuel consumption. It is known that the secondary battery has poor charge and discharge efficiency, simply installing the secondary battery offsets the efficiency improvement of the diesel generator and the charge and discharge loss of the secondary battery, and the secondary battery is less effective for the purpose of improving the fuel consumption efficiency.

In the related-art system, only a main propulsion engine having a capacity commensurate with fluctuations in ship power demand has been provided as a device that performs the power generation. When the organic Rankine cycle system and the secondary battery are additionally installed in this related-art system to smooth the load of the main propulsion engine, the load factor of the main propulsion engine is constant and low-load running is always performed. Here, there is a problem that the low-load running of the main propulsion engine has poor fuel consumption efficiency.

The present disclosure has been made in view of such circumstances, and an object thereof is to provide a marine power supply system that includes a diesel generator, an organic Rankine cycle system, and a secondary battery and runs the diesel generator at a high load, a vessel equipped with the marine power supply system, a marine power supply system control method, and a marine power supply system control program.

### Solution to Problem

In order to solve the above problems, the marine power supply system, the vessel equipped with the marine power supply system, the marine power supply system control method, and the marine power supply system control program according to the present disclosure adopt the following means.

A marine power supply system according to a first aspect of the present disclosure is a marine power supply system including a diesel generator that generates power; an organic Rankine cycle system that generates power using an organic heat medium as a heat source; a secondary battery; and a control system. The control system performs control so as to cover ship power demand by combining the diesel generator, the organic Rankine cycle system, and the secondary battery with each other. The diesel generator has a load factor of 60% or more and 90% or less with respect to an average ship power demand. The control system performs control so as to charge the secondary battery with surplus power in a case where the ship power demand does not exceed a total output of the diesel generator and the organic Rankine cycle system and performs control so as to discharge the power stored in the secondary battery in a case where the ship power demand exceeds the total output of the diesel generator and the organic Rankine cycle system.

According to the present aspect, there is provided the marine power supply system includes the diesel generator that generates power; the organic Rankine cycle system that generates power using the organic heat medium as the heat source; the secondary battery; and the control system. The control system performs control so as to cover the ship power demand by combining the diesel generator, the organic Rankine cycle system, and the secondary battery with each other. The diesel generator has a load factor of 60% or more and 90% or less with respect to the average ship power demand. The control system performs control so as to charge the secondary battery with the surplus power in a case where the ship power demand does not exceed the total output of the diesel generator and the organic Rankine cycle system and performs control so as to discharge the power stored in the secondary battery in a case where the ship power demand exceeds the total output of the diesel generator and the organic Rankine cycle system. Accordingly, when the ship power demand is near an average value, the diesel generator is used at a load factor with excellent fuel consumption efficiency, and when the ship power demand increases, the organic Rankine cycle system and the secondary battery are used in addition to the diesel generator to cover the amount of increase.

Since power is generated by the organic Rankine cycle system and the secondary battery, the capacity of the diesel generator can be reduced, that is, a low-capacity diesel generator can be used. Therefore, the introduction cost can be reduced.

In a case where the secondary battery is charged by the organic Rankine cycle system, it is not necessary to charge the secondary battery, using the diesel generator. Therefore, the fuel cost of the diesel generator can be reduced.

During a normal voyage, the secondary battery is charged, and a sudden increase in load such as the start of a bow thruster at the time of departure is covered by the discharging of the secondary battery. Therefore, the generation of graphite in the diesel generator, particularly in a port area can be prevented.

A marine power supply system according to a second aspect of the present disclosure is a marine power supply system including a diesel generator that generates power; an organic Rankine cycle system that generates power using an organic heat medium as a heat source; a secondary battery; and a control system. The control system performs control so as to cover ship power demand by combining the diesel generator, the organic Rankine cycle system, and the secondary battery with each other. The diesel generator is a power generator having a smaller output than a main propulsion engine. The control system performs control so as to charge the secondary battery with surplus power in a case where the ship power demand does not exceed a total output of the diesel generator and the organic Rankine cycle system and performs control so as to discharge the power stored in the secondary battery in a case where the ship power demand exceeds the total output of the diesel generator and the organic Rankine cycle system.

According to the present aspect, there is provided the marine power supply system including the diesel generator that generates power; the organic Rankine cycle system that generates power using the organic heat medium as the heat source; the secondary battery; and the control system. The control system performs control so as to cover the ship power demand by combining the diesel generator, the organic Rankine cycle system, and the secondary battery with each other. The diesel generator is the power generator having a smaller output than the main propulsion engine. The control system performs control so as to charge the secondary battery with the surplus power in a case where the ship power demand does not exceed the total output of the diesel generator and the organic Rankine cycle system and performs control so as to discharge the power stored in the secondary battery in a case where the ship power demand exceeds the total output of the diesel generator and the organic Rankine cycle system. Accordingly, the ship power demand can be covered by the generator having a smaller output than the main propulsion engine without using the main propulsion engine.

The diesel generator can achieve low fuel consumption by being operated in a high-load range. In a case where the main propulsion engine is used to cover the ship power demand and in a case where the ship power demand is lower than the capacity of the main propulsion engine, the main propulsion engine operates in a low-load range and has poor fuel consumption efficiency.

Additionally, it is considered that the secondary battery is provided to smooth the load of the main propulsion engine for the purpose of supplying power for a short time in the event of a power failure, achieving the high efficiency of the main propulsion engine, and simplifying the control. However, since the charge and discharge efficiency of the secondary battery is poor, and the improvement in the efficiency of the main propulsion engine is offset by the loss during the charging and discharging of the secondary battery simply by installing the secondary battery, a fuel consumption improving effect is small.

Therefore, the diesel generator having a smaller output than the main propulsion engine is used. Accordingly, the diesel generator operates in the high-load range, so that the fuel consumption can be suppressed. In a case where the diesel generator alone cannot cover the ship power demand, the organic Rankine cycle system and the secondary battery are used in combination, so that the amount of increase in the ship power demand can be covered.

Since power is generated by the organic Rankine cycle system and the secondary battery, the capacity of the diesel generator can be reduced. Since a low-capacity diesel generator can be used, the introduction cost can be reduced.

In a case where the secondary battery is charged by the organic Rankine cycle system, it is not necessary to charge the secondary battery, using the diesel generator. Therefore, the fuel cost of the diesel generator can be reduced.

During a normal voyage, the secondary battery is charged, and a sudden increase in load such as the start of the bow thruster at the time of departure is covered by the discharging of the secondary battery. Accordingly, it is possible to prevent the generation of graphite in the diesel generator, particularly in a port area.

In the second aspect, the control system may control outputs of the diesel generator and the organic Rankine cycle system to be constant.

According to the present aspect, the control system controls the outputs of the diesel generator and the organic Rankine cycle system to be constant. Accordingly, the control system does not require complicated control. Additionally, the output of the diesel generator can be set to a predetermined value such that high-load running is performed. Fluctuations in the load are handled by the charge and discharge of the secondary battery.

In the above second aspect, the control system may control to switch between a start and a stop of the diesel generator in accordance with an increase or decrease in the ship power demand.

According to the present aspect, the control system controls to switch between the start and the stop of the diesel generator in accordance with an increase or decrease in the ship power demand. Accordingly, the diesel generator is operated only in a case where the diesel generator is brought into a high-load running. Therefore, the fuel consumption of the diesel generator can be suppressed. In a case where the diesel generator is stopped, the organic Rankine cycle system and the secondary battery cover the ship power demand.

A vessel according to a third aspect of the present disclosure includes the above-described marine power supply system.

A marine power supply system control method according to a fourth aspect of the present disclosure is a marine power supply system control method of performing control so as to cover ship power demand by combining a diesel generator, an organic Rankine cycle system, and a secondary battery with each other. The marine power supply system control method includes a step of controlling a load factor of the diesel generator to be 60% or more and 90% or less with respect to an average ship power demand; a step of performing control so as to charge the secondary battery with surplus power in a case where the ship power demand does not exceed a total output of the diesel generator and the organic Rankine cycle system; and a step of performing control so as to discharge the power stored in the secondary battery in a case where the ship power demand exceeds the total output of the diesel generator and the organic Rankine cycle system.

A marine power supply system control program according to a fifth aspect of the present disclosure is a marine power supply system control program of performing control so as to cover ship power demand by combining a diesel generator, an organic Rankine cycle system, and a secondary battery with each other. The marine power supply system control program includes a step of controlling a load factor of the diesel generator to be 60% or more and 90% or less with respect to an average ship power demand; a step of performing control so as to charge the secondary battery with surplus power in a case where the ship power demand does not exceed a total output of the diesel generator and the organic Rankine cycle system; and a step of performing control so as to discharge the power stored in the secondary battery in a case where the ship power demand exceeds the total output of the diesel generator and the organic Rankine cycle system. Advantageous Effects of Invention

According to the present disclosure, since the diesel generator is run at a high load, the fuel consumption of the diesel generator can be low fuel consumption.

### Brief Description of Drawings

Fig. 1 is a schematic configuration diagram illustrating a marine power supply system using a main propulsion engine.
Fig. 2 is a schematic configuration diagram illustrating an ORC system.
Fig. 3 is a graph illustrating fuel consumption with respect to the output of a diesel generator.
Fig. 4 is a graph illustrating changes in respective values of power, fuel consumption rate, fuel consumption amount integrated value, and secondary battery charge amount in a case where the configuration of Fig. 1 is used.
Fig. 5 is a schematic configuration diagram illustrating a marine power supply system according to a first embodiment of the present disclosure.
Fig. 6 is a graph illustrating changes in respective values of the power, the fuel consumption rate, the fuel consumption amount integrated value, and the secondary battery charge amount in a case where the marine power supply system according to the first embodiment of the present disclosure is used.
Fig. 7 is a graph illustrating changes in respective values of the power, the fuel consumption rate, the fuel consumption amount integrated value, and the secondary battery charge amount in a case where a marine power supply system according to a second embodiment of the present disclosure is used.

### Description of Embodiments

Hereinafter, embodiments of a marine power supply system, a vessel equipped with the same, a marine power supply system control method, and a marine power supply system control program according to the present disclosure will be described with reference to the drawings.

### [First Embodiment]

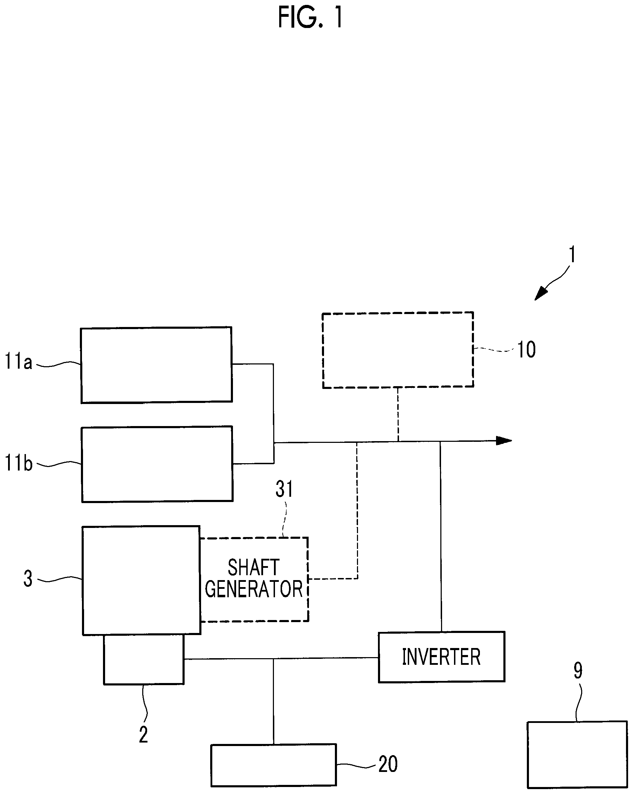

Hereinafter, a first embodiment of the present disclosure will be described with reference to Figs. 1 to 6.

Fig. 1 illustrates a schematic configuration of a marine power supply system using a main propulsion engine.

As illustrated in Fig. 1, the marine power supply system 1 using the main propulsion engine includes main propulsion engines 11a and 11b, a diesel generator 10, a propelling main engine 3, and an organic Rankine cycle system (ORC system) 2, and a secondary battery 20 as main components.

In the following description, either a or b is given to the end in a case where the main propulsion engines 11 are distinguished from each other, and a or b is omitted in a case where the respective main propulsion engines 11 are not distinguished from each other.

The main propulsion engines 11a and 11b perform power generation to cover ship power demand. Normally, one main propulsion engine 11 is always in operation, and only in a case where the ship power demand becomes a high load, two main propulsion engines 11 are operated with equal loads. Additionally, the loads also follow fluctuations in the ship power demand.

The diesel generator 10 is a diesel generator having a smaller output than each main propulsion engine 11 and is used as, for example, a generator for berthing.

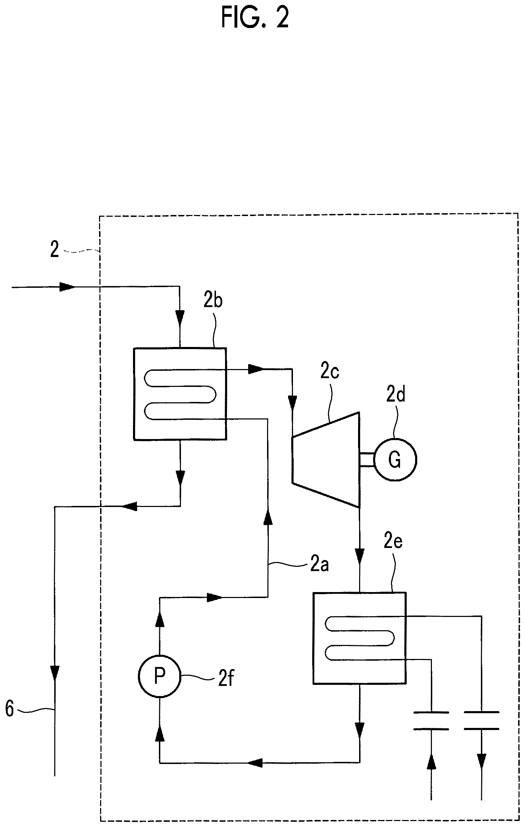

Fig. 2 illustrates a schematic configuration of the ORC system according to the present embodiment.

The ORC system 2 is a system that performs power generation using an organic heat medium as a heat source. In the present embodiment, the ORC system 2 is a system that uses jacket cooling water to which the heat generated by the combustion of diesel fuel in the propelling main engine 3 is transferred, thereby performing heat exchange between the jacket cooling water and the organic heat medium and performs power generation using the organic heat medium as a heat source.

As illustrated in Fig. 2, the ORC system 2 includes an organic fluid circulation flow line 2a, an evaporator 2b, a power turbine 2c, a generator 2d, a condenser 2e, and a circulation pump 2f.

The organic fluid circulation flow line 2a is a flow path for circulating an organic fluid (working fluid; organic heat medium) that is heat-exchanged with the jacket cooling water in the propelling main engine 3 that circulates in a cooling water circulation flow path 6. As the organic fluid, a fluid having a boiling point lower than that of water is used. Therefore, the organic fluid circulating in the organic fluid circulation flow line 2a is evaporated by exchanging heat with high-temperature cooling water (for example, about 85°C).

As the organic fluid having a boiling point lower than that of water, low molecular hydrocarbons such as isopentane, butane, and propane, and refrigerants such as R134a and R245fa can be used.

The evaporator 2b is a device that evaporates the organic fluid by exchanging heat between the jacket cooling water and the organic fluid in the propelling main engine 3 flowing through the cooling water circulation flow path 6. The evaporator 2b evaporates the organic fluid flowing in from the circulation pump 2f via the organic fluid circulation flow line 2a and supplies the evaporated organic fluid to the power turbine 2c.

The power turbine 2c is a device that is rotated by a gas-phase organic fluid evaporated by the evaporator 2b. The power turbine 2c has a rotor shaft (not illustrated) connected to the generator 2d and transmits the rotational power of the rotor shaft to the generator 2d. The organic fluid that has worked to give the rotational power to the power turbine 2c is discharged from the power turbine 2c and then supplied to the condenser 2e.

The generator 2d is a device that performs power generation by the rotational power of the rotor shaft transmitted from the power turbine 2c. The power generated by the generator 2d is supplied to each part of the vessel on which the marine power supply system 1 of the present embodiment is mounted in order to cover the ship power demand.

The condenser 2e is a device that cools the organic fluid discharged from the power turbine 2c with seawater and condenses a gas-phase organic fluid into a liquid-phase organic fluid. The liquid-phase organic fluid condensed by the condenser 2e is supplied to the circulation pump 2f via the organic fluid circulation flow line 2a.

The circulation pump 2f is a device that pumps the liquid-phase organic fluid supplied from the condenser 2e to the evaporator 2b via the organic fluid circulation flow line 2a. As the circulation pump 2f pumps the organic fluid, the organic fluid circulates on the organic fluid circulation flow line 2a in order of the evaporator 2b, the power turbine 2c, and the condenser 2e. The discharge amount of the organic fluid discharged by the circulation pump 2f is controlled by the control system 9.

As illustrated in Fig. 1, the propelling main engine 3 is a main engine that generates the propulsive force of the vessel, and is an internal combustion engine that performs combustion together with scavenging air using at least any one of fuel oil and fuel gas as a main fuel. Although the propelling main engine 3 of Fig. 1 is provided with a shaft generator 31, the shaft generator 31 may not be installed, and the output thereof is not included in the study of the present disclosure.

The propelling main engine 3 has a water jacket (not illustrated) that is a passage through which the cooling water flows outside an engine cylinder. The propelling main engine 3 guides the cooling water flowing in from a cooling water inlet to the water jacket to cool the periphery of the water jacket, and discharges the cooling water from a cooling water outlet to the cooling water circulation flow path 6.

The cooling water that has cooled the propelling main engine 3 flows in from the cooling water circulation flow path 6, passes through the evaporator 2b, is heat-exchanged with the organic fluid that circulates in the organic fluid circulation flow line 2a, and is supplied to the cooling water circulation flow path 6.

As illustrated in Fig. 1, the secondary battery 20 is installed for the purpose of responding to sudden fluctuations in the ship power demand or for the purpose of supplying power for a short time in the event of a power failure. In addition to this, the secondary battery 20 is used to level the fluctuation of the load of the main propulsion engine 11. Accordingly, the high efficiency of the main propulsion engine 11 is achieved, and a fuel efficiency improving effect is expected.

The secondary battery 20 is a lithium ion battery, a lead battery, a nickel hydrogen battery, or the like, and is not particularly limited, but a lithium ion battery is preferably used because the output density and energy density thereof are high. The capacity of the secondary battery 20 of the present embodiment is assumed to be 100 kW.

In the following description, the secondary battery 20 is charged from the ORC system 2, but the present invention is not limited to this, and the secondary battery 20 may be charged from another device depending on the operation conditions. For example, in a case where the ORC system 2 is stopped or in a case where exhaust heat is small, charging may be performed from another device such as the diesel generator 10.

The control system 9 controls the main propulsion engine 11, the diesel generator 10, the ORC system 2, and the secondary battery 20.

The control system 9 includes, for example, a central processing unit (CPU), a random access memory (RAM), a read only memory (ROM), a computer-readable storage medium, and the like. A series of processing for realizing various functions is stored in a storage medium or the like in the form of a program as an example, and the CPU reads the program into the RAM or the like to execute information processing/arithmetic processing to realize the various functions. In addition, a form in which the program is installed in advance in the ROM or other storage medium, a form in which the program is provided in a state of being stored in the computer-readable storage medium, or a form in which the program is distributed via wired or wireless communication means, or the like may be applied. The computer-readable storage medium is a magnetic disk, a magneto-optical disk, a CD-ROM, a DVD-ROM, a semiconductor memory, or the like.

In the related-art system, only the main propulsion engine 11 is provided as a device that performs power generation, and fluctuations in the ship power demand have been handled by adjusting the load of the main propulsion engine 11. For that reason, the main propulsion engine 11 having a capacity commensurate with the fluctuations in the ship power demand has been provided.

Here, the main propulsion engine 11 is a diesel generator having a large capacity in order to cover the ship power demand only with itself. For example, in the case of Fig. 1, each of the main propulsion engines 11 is, for example, a 680 kW diesel generator.

In contrast to this related-art system, the marine power supply system 1 of the present embodiment additionally installs the ORC system 2 and the secondary battery 20 without replacing the main propulsion engine 11. The marine power supply system 1 smooths the load of the main propulsion engine 11 for the purpose of supplying power for a short time in the event of a power failure, achieving the high efficiency of the main propulsion engine 11, and simplifying the control, using the ORC system 2 and the secondary battery 20.

However, when the capacity of the main propulsion engine 11 is too large with respect to the average ship power demand, which is the average of the ship power demand, the main propulsion engine 11 has a low load.

When the ORC system 2 and the secondary battery 20 are additionally installed as illustrated in Fig. 1 with respect to the related-art system, a part of the ship power demand is covered by the power recovered from the exhaust heat by the ORC system 2, and the secondary battery 20 absorbs the load fluctuation of the main propulsion engine 11, that is, smooths the load. As a result, the main propulsion engine 11 is always run at a low load.

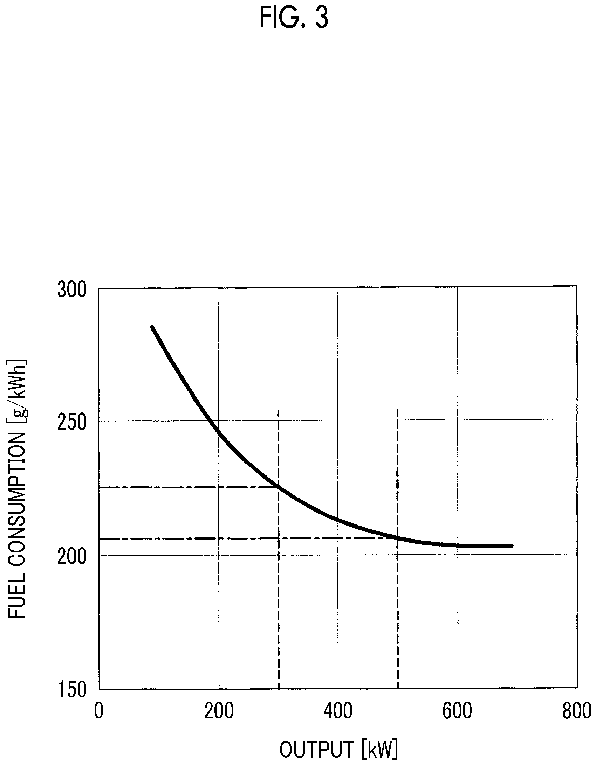

In Fig. 3, the fuel consumption with respect to the output of the diesel generator is illustrated in a graph.

In Fig. 3, a vertical axis represents the fuel consumption of the diesel generator, and a horizontal axis represents the output of the diesel generator. As the output of the diesel generator is higher, the fuel consumption decreases, that is, the fuel consumption efficiency increases. Therefore, a graph that is gently downward to the right is illustrated.

As illustrated in Fig. 3, the diesel generator has excellent fuel consumption efficiency in the case of a high load. In particular, the fuel consumption efficiency is excellent in a case where the load factor is 60% or more and 90% or less.

Thus, in a case where the main propulsion engine 11 has a low load, the fuel consumption efficiency becomes poor.

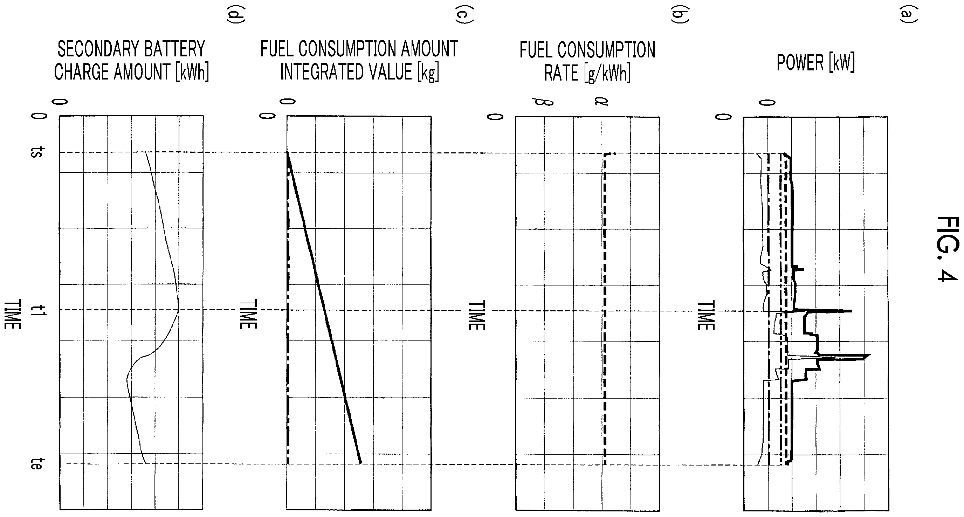

In Fig. 4, changes in respective values of power, fuel consumption rate, fuel consumption amount integrated value, and secondary battery charge amount in a case where the configuration of Fig. 1 is used are illustrated in a graph.

Respective horizontal axes of Fig. 4 represent time, a vertical axis of Fig. 4(a) represents power, a vertical axis of Fig. 4(b) represents the fuel consumption rate, a vertical axis of Fig. 4(c) represents the fuel consumption amount integrated value, and a vertical axis of Fig. 4(d) represents the secondary battery charge amount.

In Fig. 4(a), a thick solid line indicates total power, which is equal to the ship power demand. Additionally, a dotted line indicates the power of the main propulsion engine 11a, a one-dot chain line indicates the power of the main propulsion engine 11b, a two-dot chain line indicates the output of the ORC system 2, and a solid line indicates the output (charge and discharge) of the secondary battery 20.

In Fig. 4(b), a dotted line indicates the fuel consumption rate of the main propulsion engine 11a.

In Fig. 4(c), a solid line indicates the total fuel consumption amount of the main propulsion engine 11, and a one-dot chain line indicates the fuel consumption amount of the main propulsion engine 11b.

In Fig. 4(d), a solid line indicates the charge amount of the secondary battery 20.

It is assumed that the ship power demand indicated by a thick line is required between time ts and time te in Fig. 4(a).

It is assumed that the capacity of the main propulsion engine 11 is 680 kW, and the output of the ORC system 2 is 100 kW. Since only one main propulsion engine 11 is run with respect to the ship power demand, the main propulsion engine 11b is stopped and the output thereof is 0 from time ts to time te as indicated by the one-dot chain line in Fig. 4(a). The main propulsion engine 11a and the ORC system 2 are run with a constant output as indicated by the dotted line and the two-dot chain line in Fig. 4(a). From the graph of Fig. 4(a), the average ship power demand is 242 kW, and the maximum ship power demand is 820 kW. Assuming that the ORC system 2 is run with a constant output of 100 kW, the main propulsion engine 11a is run with a constant output of 148 kW in which a value obtained by subtracting the output of the ORC system 2 from the average ship power demand has a margin value.

From time ts to time t1, the ship power demand can be covered only by the total output of the main propulsion engine 11a and the ORC system 2. In this case, the secondary battery 20 takes a negative value as indicated by the solid line in Fig. 4(a), which indicates charging. The secondary battery 20 is charged with surplus power by the ORC system 2.

When the ship power demand increases at time t1, the total output of the main propulsion engine 11a and the ORC system 2, which are considered to be a constant output, cannot cover the ship power demand. Therefore, the ship power demand is covered by discharging the power stored in the secondary battery 20. After that, when the ship power demand decreases and can be covered by the total output of the main propulsion engine 11a and the ORC system 2, the secondary battery 20 charges the surplus from the ORC system 2.

Since the main propulsion engine 11a is run with a load of 148 kW with respect to a capacity of 680 kW, the load factor thereof is 22%. Here, the load factor is such a load factor that the charge amount of the secondary battery 20 at time ts recovers to the initial value of the charge amount at time te.

As illustrated in Fig. 4(b), the fuel consumption rate of the main propulsion engine 11a is α g/kWh (α is, for example, 260), which is substantially constant.

As illustrated in Fig. 4(c), since the total fuel consumption amount of the main propulsion engines 11, that is, the main propulsion engine 11a and the main propulsion engine 11b is the running of only the main propulsion engine 11a, the fuel consumption amount of the main propulsion engine 11a is illustrated. The fuel consumption amount integrated value of the main propulsion engine 11a increases with time and reaches about 51 kg at time te.

Regarding the secondary battery 20, in a case where the charge amount at time ts is 70 kWh, the load factor of the main propulsion engine 11a is determined so as to be recovered to the initial value of 70 kWh at time te. During the period from time ts to time t1, the charge amount of the secondary battery 20 increases because the battery is charged from the ORC system 2. Since the discharging is started at time t1, the charge amount of the secondary battery 20 decreases. However, when the discharging is no longer necessary and the charging is started from the ORC system 2 again, the charge amount of the secondary battery 20 increases and the charge amount is recovered to the initial value of 70 kWh at time te.

In this way, in a case where the ORC system 2 and the secondary battery 20 are simply and additionally installed in the related-art system, the load factor of the main propulsion engine 11 becomes low, and it is difficult to perform running with excellent fuel consumption efficiency.

Thus, in the present embodiment, it is assumed that the diesel generator 10 having an output smaller than that of the main propulsion engine 11 is used as a main generator. In a case where the diesel generator 10 alone cannot cover the maximum ship power demand, it is assumed that the ORC system 2 and the secondary battery 20 are used in combination.

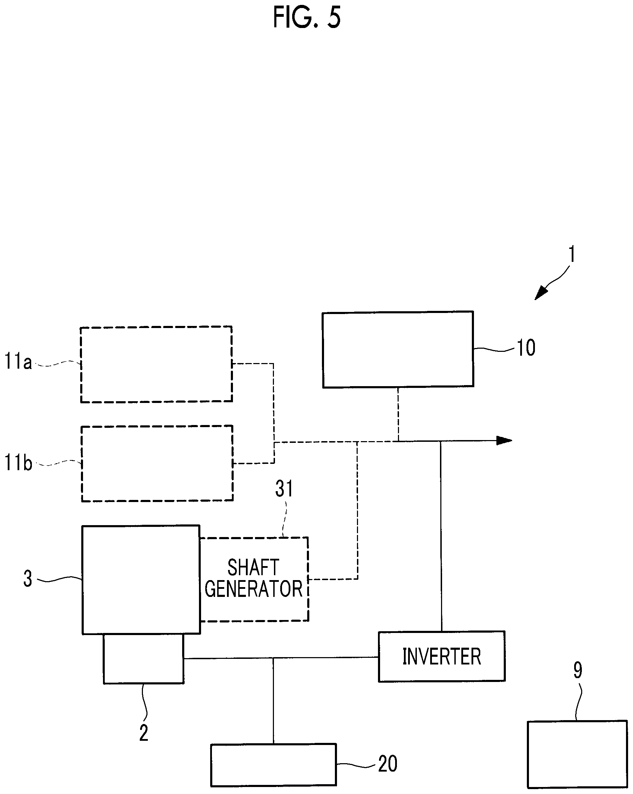

Fig. 5 illustrates a schematic configuration of the marine power supply system according to the present embodiment.

As illustrated in Fig. 5, the configuration of the present embodiment is substantially the same as the configuration illustrated in Fig. 1, but the diesel generator 10 is used as the main generator instead of the main propulsion engine 11.

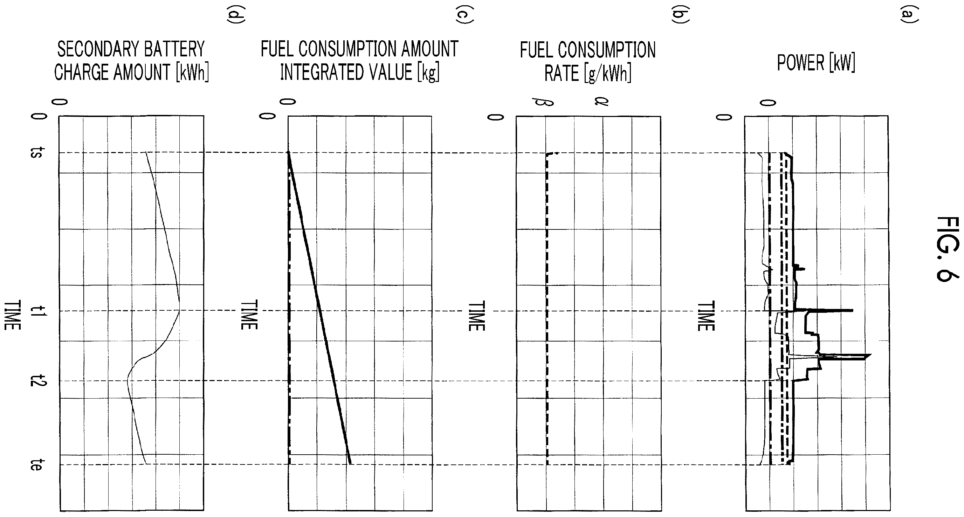

In Fig. 6, changes in respective values of the power, the fuel consumption rate, the fuel consumption amount integrated value, and the secondary battery charge amount in a case where the marine power supply system according to the present embodiment is used is illustrated in a graph.

Respective horizontal axes of Fig. 6 represent time, a vertical axis of Fig. 6(a) represents power, a vertical axis of Fig. 6(b) represents the fuel consumption rate, a vertical axis of Fig. 6(c) represents the fuel consumption amount integrated value, and a vertical axis of Fig. 6(d) represents the secondary battery charge amount.

In Fig. 6(a), a thick solid line indicates total power, which is equal to the ship power demand. Additionally, a dotted line indicates the power of the diesel generator 10, a one-dot chain line indicates the power of the main propulsion engine 11, a two-dot chain line indicates the output of the ORC system 2, and a solid line indicates the output (charge and discharge) of the secondary battery 20.

In Fig. 6(b), a dotted line indicates the fuel consumption rate of the diesel generator 10.

In Fig. 6(c), a solid line indicates the total fuel consumption amount of the diesel generator 10 and the main propulsion engine 11, and a one-dot chain line indicates the fuel consumption amount of the main propulsion engine 11.

In Fig. 6(d), a solid line indicates the charge amount of the secondary battery 20.

It is assumed that the ship power demand indicated by a thick line is required between time ts and time te in Fig. 6(a).

It is assumed that the capacity of the diesel generator 10 is 240 kW, and the output of the ORC system 2 is 100 kW. Since the diesel generator 10 is run as the main generator with respect to the ship power demand, the main propulsion engine 11 is stopped and the output thereof is 0 from time ts to time te as indicated by the one-dot chain line in Fig. 6(a). The diesel generator 10 and the ORC system 2 are run with a constant output as indicated by the dotted line and the two-dot chain line in Fig. 6(a). From the graph of Fig. 6(a), the average ship power demand is 242 kW, and the maximum ship power demand is 820 kW. Assuming that the ORC system 2 is run with a constant output of 100 kW, the control system 9 performs control such that the diesel generator 10 is run with a constant output of 148 kW in which a value obtained by subtracting the output of the ORC system 2 from the average ship power demand has a margin value.

From time ts to time t1, the ship power demand can be covered only by the total output of the diesel generator 10 and the ORC system 2. In this case, the secondary battery 20 takes a negative value as indicated by the solid line in Fig. 6(a), which indicates charging. The secondary battery 20 is charged with surplus power by the ORC system 2.

When the ship power demand increases at time t1, the total output of the diesel generator 10 and the ORC system 2 cannot cover the ship power demand. Therefore, the ship power demand is covered by discharging the power stored in the secondary battery 20. After that, when the ship power demand decreases and can be covered by the total output of the diesel generator 10 and the ORC system 2, the secondary battery 20 charges the surplus from the ORC system 2.

Since the diesel generator 10 is run with a load of 148 kW with respect to a capacity of 240 kW, the load factor thereof is 61%. Here, the load factor is such a load factor that the charge amount of the secondary battery 20 at time ts recovers to the initial value of the charge amount at time te.

As illustrated in Fig. 6(b), the fuel consumption rate of the diesel generator 10 is β g/kWh (β is, for example, 220), which is substantially constant.

As illustrated in Fig. 6(c), since the total fuel consumption amount of the diesel generators 10 and the main propulsion engine 11 is the running of only the diesel generator 10, the fuel consumption amount of the diesel generator 10 is illustrated. The fuel consumption amount integrated value of the diesel generator 10 increases with time and reaches about 43 kg at time te.

Regarding the secondary battery 20, in a case where the charge amount at time ts is 70 kWh, the load factor of the diesel generator 10 is determined so as to be recovered to the initial value of 70 kWh at time te. During the period from time ts to time t1, the charge amount of the secondary battery 20 increases because the battery is charged from the ORC system 2. Since the discharging is started at time t1, the charge amount of the secondary battery 20 decreases. When the discharging is no longer necessary at time t2 and the charging is started from the ORC system 2 again, the charge amount of the secondary battery 20 increases and the charge amount is recovered to the initial value of 70 kWh at time te.

In a case where the diesel generator 10 is used as the main generator, the control system 9 performs control such that the diesel generator 10 is run at a load factor of 60 to 90% in which the load factor is high and the fuel consumption efficiency is excellent. The running with fuel consumption efficiency can be performed, and the fuel consumption amount integrated value can be reduced by about 15% as compared to a case where the main propulsion engine 11 is used.

The above control is performed by the control system 9. The control system 9 controls the ORC system 2 and the charge and discharge control of the secondary battery 20.

In a case where only the ORC system 2 is installed or in a case where only the secondary battery 20 is installed, one inverter is independently required for each. However, in the case of the present embodiment, one inverter can be used.

As described above, according to the marine power supply system, the vessel equipped with the same, the marine power supply system control method, and the marine power supply system control program according to the present embodiment, the following actions and effects are exhibited.

According to the present embodiment, there is provided the marine power supply system 1 including the diesel generator 10 that generates power, the ORC system 2 that generates power using the organic heat medium as the heat source, the secondary battery 20, and the control system 9. The control system 9 performs control so as to cover the ship power demand by combining the diesel generator 10, the ORC system 2, and the secondary battery 20 with each other. The diesel generator 10 is a power generator having a smaller output than the main propulsion engine 11. The control system 9 performs control so as to charge the secondary battery 20 with the surplus power in a case where the ship power demand does not exceed the total output of the diesel generator 10 and the ORC system 2 and performs control so as to discharge the power stored in the secondary battery 20 in a case where the ship power demand exceeds the total output of the diesel generator 10 and the ORC system 2. Therefore, the ship power demand can be covered by the diesel generator 10 having a smaller output than the main propulsion engine 11 without using the main propulsion engine 11.

The diesel generator can achieve low fuel consumption by being operated in a high-load range. In a case where the main propulsion engine 11 is used to cover the ship power demand and in a case where the ship power demand is lower than the capacity of the main propulsion engine 11 (for example, equal to or less than half of the capacity), the main propulsion engine 11 operates in a low-load range and has poor fuel consumption efficiency.

It is considered that the secondary battery 20 is provided to smooth the load of the main propulsion engine 11 for the purpose of supplying power for a short time in the event of a power failure, achieving the high efficiency of the main propulsion engine 11, and simplifying the control. However, since the charge and discharge efficiency of the secondary battery 20 is poor, and the improvement in the efficiency of the main propulsion engine 11 is offset by the loss during the charge and discharge of the secondary battery 20 simply by installing the secondary battery 20, a fuel consumption improving effect is small.

Therefore, the diesel generator 10 having a smaller output than the main propulsion engine 11 is used. Accordingly, the diesel generator 10 operates in the high-load range, so that the fuel consumption can be suppressed. In a case where the diesel generator 10 alone cannot cover the ship power demand, the ORC system 2 and the secondary battery 20 are used in combination, so that the amount of increase in the ship power demand can be covered.

Since power is generated by the ORC system 2 and the secondary battery 20, the capacity of the diesel generator 10 can be reduced, that is, a low-capacity diesel generator can be used. Therefore, the introduction cost can be reduced.

In a case where the secondary battery 20 is charged by the ORC system 2, it is not necessary to charge the secondary battery 20, using the diesel generator 10. Therefore, the fuel cost of the diesel generator 10 can be reduced.

During a normal voyage, the secondary battery 20 is charged, and a sudden increase in load such as the start of a bow thruster at the time of departure is covered by the discharging of the secondary battery 20. Therefore, the generation of graphite in the diesel generator 10, particularly in a port area can be prevented.

According to the present embodiment, since the control system 9 controls the outputs of the diesel generator 10 and the ORC system 2 to be constant, a complicated control is not required. The output of the diesel generator 10 can be set to a predetermined value such that high-load running is performed. Fluctuations in the load are handled by the charge and discharge of the secondary battery 20.

According to the present embodiment, the number of inverters required in a case where the ORC system 2 and the secondary battery 20 are independently provided is reduced by one, so that one inverter can be used, and the introduction cost can be reduced.

### [Second Embodiment]

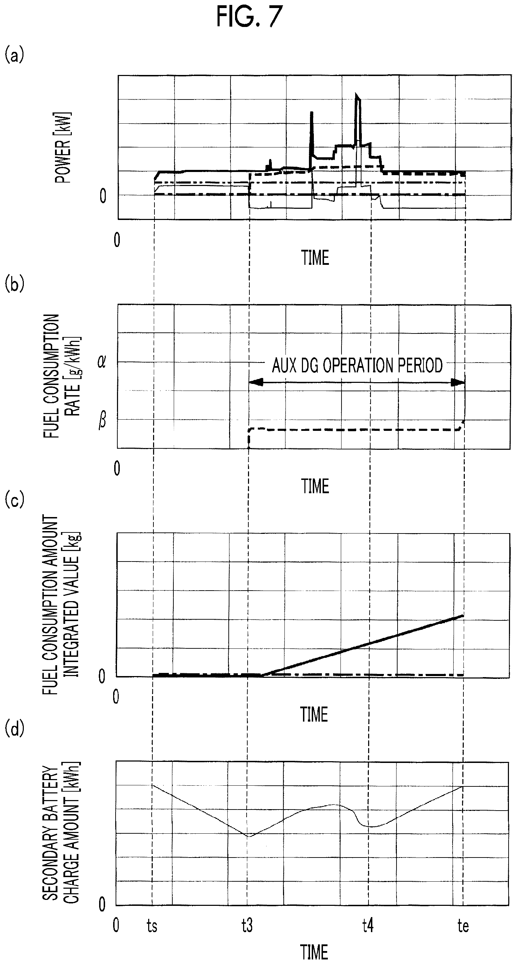

Hereinafter, a second embodiment of the present disclosure will be described with reference to Fig. 7.

In the first embodiment described above, the diesel generator is always operated. However, in the present embodiment, the diesel generator is operated only in a case where the diesel generator can be run at a high load factor (a load factor that is as close to 100% as possible). Since other points are the same as those in the first embodiment, the same components will be designated by the same reference numerals, and the description thereof will be omitted.

The charge amount of the secondary battery 20 is limited to 100 kW, and in a case where the diesel generator 10 is always operated without start or stop, the charge amount of the secondary battery 20 exceeds the capacity when reaching the limit value of 100 kW. Therefore, the secondary battery cannot be charged anymore. As a result, it is necessary to reduce the load factor of the diesel generator 10. Thus, in a case where the diesel generator 10 is always operated, it is difficult to always perform running at a load factor close to 100%.

In Fig. 7, changes in respective values of the power, the fuel consumption rate, the fuel consumption amount integrated value, and the secondary battery charge amount in a case where the marine power supply system according to the present embodiment is used is illustrated in a graph.

Respective horizontal axes of Fig. 7 represent time, a vertical axis of Fig. 7(a) represents power, a vertical axis of Fig. 7(b) represents the fuel consumption rate, a vertical axis of Fig. 7(c) represents the fuel consumption amount integrated value, and a vertical axis of Fig. 7(d) represents the secondary battery charge amount.

In Fig. 7(a), a thick solid line indicates total power, which is equal to the ship power demand. Additionally, a dotted line indicates the power of the diesel generator 10, a one-dot chain line indicates the power of the main propulsion engine 11, a two-dot chain line indicates the output of the ORC system 2, and a solid line indicates the output (charge and discharge) of the secondary battery 20.

In Fig. 7(b), a dotted line indicates the fuel consumption rate of the diesel generator 10.

In Fig. 7(c), a solid line indicates the total fuel consumption amount of the diesel generator 10 and the main propulsion engine 11, and a one-dot chain line indicates the fuel consumption amount of the main propulsion engine 11.

In Fig. 7(d), a solid line indicates the charge amount of the secondary battery 20.

It is assumed that the ship power demand indicated by a thick line is required between time ts and time te in Fig. 7(a).

It is assumed that the capacity of the diesel generator 10 is 240 kW, and the output of the ORC system 2 is 100 kW. Since the diesel generator 10 is run as the main generator with respect to the ship power demand, the main propulsion engine 11 is stopped and the output thereof is 0 from time ts to time te as indicated by the one-dot chain line in Fig. 7 (a). Additionally, the ORC system 2 is run at a constant output of 100 kW as indicated by the two-dot chain line in Fig. 7(a). It is assumed that the diesel generator 10 is run only during a period in which the diesel generator 10 can be run at a high load factor (a load factor that is as close to 100% as possible). Therefore, in a case where the output of the ORC system 2 alone is insufficient for the ship power demand, the power is covered by discharging the secondary battery 20. The load factor and start or stop timing of the diesel generator 10 are determined so as to be recovered to the initial value of 100 kWh at time te in a case where the charge amount of the secondary battery 20 at time ts is 100 kWh. Additionally, from the graph of Fig. 7(a), the average ship power demand is 242 kW, and the maximum ship power demand is 820 kW.

From time ts to time t3, the ship power demand can be covered only by the total output of the ORC system 2 and the secondary battery 20. In this case, the secondary battery 20 takes a positive value as indicated by the solid line in Fig. 7(a), which indicates discharging.

On the basis of the determined start or stop timing, the diesel generator 10 performs running at time t3, and the secondary battery 20 is switched to charging. In a period after time t3, the diesel generator 10 is run at a load factor of 80 to 100% in accordance with the ship power demand. Additionally, in a case where the total output of the diesel generator 10 and the ORC system 2 exceeds the ship power demand and a surplus is generated, the control system 9 controls the secondary battery 20 to be charged from the ORC system 2. In a case where the total output of the diesel generator 10 and the ORC system 2 is less than the ship power demand, a shortage is compensated by discharging the secondary battery 20.

As illustrated in Fig. 7(b), the diesel generator 10 is operated from time t3, and the fuel consumption rate thereof is about 213 g/kWh, which is less than β g/kWh (β is, for example, 220) illustrated in Fig. 6(b).

Additionally, as illustrated in Fig. 7(c), since the total fuel consumption amount of the diesel generators 10 and the main propulsion engine 11 is the running of only the diesel generator 10, the fuel consumption amount of the diesel generator 10 is illustrated. The fuel consumption amount integrated value of the diesel generator 10 is about 42 kg at time te.

Additionally, since the secondary battery 20 is discharged from the time ts to time t3, the charge amount of the secondary battery 20 decreases from 100 kWh. Since charging is started at time t3, the charge amount of the secondary battery 20 increases. However, in a case where the ship power demand increases and the diesel generator 10 and the ORC system 2 alone cannot cover the ship power demand, the shortage is compensated by discharging the secondary battery 20. In this case, the charge amount decreases. The charging of the secondary battery 20 from the ORC system 2 is started at time t4, and the charge amount is recovered to the initial value of 100 kWh at time te.

In this way, in a case where the diesel generator 10 is used as the main generator and the diesel generator 10 is operated only when necessary, the load factor of the diesel generator 10 is run at a high load factor at which the load factor is high and the fuel consumption efficiency is high. Therefore, running with excellent fuel consumption efficiency can be performed, and the fuel consumption amount integrated value can be reduced by about 17% as compared to a case where the main propulsion engine 11 is used.

As described above, according to the marine power supply system, the vessel equipped with the same, the marine power supply system control method, and the marine power supply system control program according to the present embodiment, the following actions and effects are exhibited.

According to the present embodiment, the control system 9 controls to switch between the start and the stop of the diesel generator 10 in accordance with an increase or decrease in the ship power demand. Thus, the diesel generator 10 is operated only in a case where the diesel generator 10 is brought into a high-load running. Therefore, the fuel consumption of the diesel generator 10 can be suppressed. In a case where the diesel generator 10 is stopped, the ORC system 2 and the secondary battery 20 cover the ship power demand.

Although the respective embodiments of the present disclosure have been described in detail above with reference to the drawings, the specific configuration is not limited to the present embodiments. For example, in each of the above-described embodiments, the main propulsion engine 11 is installed and the diesel generator 10 is used as the main generator. However, the main propulsion engine 11 may not be installed.

In a case where the main propulsion engine 11 is not installed, it is assumed that one or a plurality of diesel generators 10 are installed in accordance with the ship power demand such that the load factor of the diesel generator 10 is 60% or more and 90% or less with respect to the average ship power demand. Regarding a control in this case, the same control as in a case where the main propulsion engine 11 is installed (first embodiment and second embodiment) is performed.

According to the present aspect, there is provided the marine power supply system 1 including the diesel generator 10 that generates power, the ORC system 2 that generates power, the secondary battery 20, and the control system 9. The control system 9 performs control so as to cover the ship power demand by combining the diesel generator 10, the ORC system 2, and the secondary battery 20 with each other. The diesel generator 10 has a load factor of 60% or more and 90% or less with respect to the average ship power demand. The control system 9 performs control so as to charge the secondary battery 20 with the surplus power in a case where the ship power demand does not exceed the total output of the diesel generator 10 and the ORC system 2 and performs control so as to discharge the power stored in the secondary battery 20 in a case where the ship power demand exceeds the total output of the diesel generator 10 and the ORC system 2. When the ship power demand is near an average value, the diesel generator 10 is used at a load factor with excellent fuel consumption efficiency, and when the ship power demand increases, the ORC system 2 and the secondary battery 20 are used in addition to the diesel generator 10 to cover the amount of increase.

Additionally, since power is generated by the ORC system 2 and the secondary battery 20, the capacity of the diesel generator 10 can be reduced, that is, a low-capacity diesel generator can be used. Therefore, the introduction cost can be reduced.

Additionally, in a case where the secondary battery 20 is charged by the ORC system 2, it is not necessary to charge the secondary battery 20, using the diesel generator 10. Therefore, the fuel cost of the diesel generator 10 can be reduced.

Additionally, during a normal voyage, the secondary battery 20 is charged, and a sudden increase in load such as the start of a bow thruster at the time of departure is covered by the discharging of the secondary battery 20. Therefore, the generation of graphite in the diesel generator 10, particularly in a port area can be prevented. Reference Signs List

- 1: Marine power supply system
- 2: ORC system (organic Rankine cycle system)
- 3: Propelling main engine
- 9: Control system
- 10: Diesel generator
- 11: Main propulsion engine
- 20: Secondary battery

## Claims

1. A marine power supply system comprising:
a diesel generator that generates power;
an organic Rankine cycle system that generates power using an organic heat medium as a heat source;
a secondary battery; and
a control system,
wherein the control system performs control so as to cover ship power demand by combining the diesel generator, the organic Rankine cycle system, and the secondary battery with each other,
the diesel generator has a load factor of 60% or more and 90% or less with respect to an average ship power demand, and
the control system performs control so as to charge the secondary battery with surplus power in a case where the ship power demand does not exceed a total output of the diesel generator and the organic Rankine cycle system and performs control so as to discharge the power stored in the secondary battery in a case where the ship power demand exceeds the total output of the diesel generator and the organic Rankine cycle system.

2. A marine power supply system comprising:
a diesel generator that generates power;
an organic Rankine cycle system that generates power using an organic heat medium as a heat source;
a secondary battery; and
a control system,
wherein the control system performs control so as to cover ship power demand by combining the diesel generator, the organic Rankine cycle system, and the secondary battery with each other,
the diesel generator is a power generator having a smaller output than a main propulsion engine, and
the control system performs control so as to charge the secondary battery with surplus power in a case where the ship power demand does not exceed a total output of the diesel generator and the organic Rankine cycle system and performs control so as to discharge the power stored in the secondary battery in a case where the ship power demand exceeds the total output of the diesel generator and the organic Rankine cycle system.

3. The marine power supply system according to claim 2,
wherein the control system controls outputs of the diesel generator and the organic Rankine cycle system to be constant.

4. The marine power supply system according to claim 2,
wherein the control system controls to switch between a start and a stop of the diesel generator in accordance with an increase or decrease in the ship power demand.

5. A vessel comprising:
the marine power supply system according to any one of claims 1 to 4.

6. A marine power supply system control method of controlling a marine power supply system that performs control so as to cover ship power demand by combining a diesel generator, an organic Rankine cycle system, and a secondary battery with each other, the marine power supply system control method comprising:
a step of controlling a load factor of the diesel generator to be 60% or more and 90% or less with respect to an average ship power demand;
a step of performing control so as to charge the secondary battery with surplus power in a case where the ship power demand does not exceed a total output of the diesel generator and the organic Rankine cycle system; and
a step of performing control so as to discharge the power stored in the secondary battery in a case where the ship power demand exceeds the total output of the diesel generator and the organic Rankine cycle system.

7. A marine power supply system control program of controlling a marine power supply system that performs control so as to cover ship power demand by combining a diesel generator, an organic Rankine cycle system, and a secondary battery with each other, the marine power supply system control program comprising:
a step of controlling a load factor of the diesel generator to be 60% or more and 90% or less with respect to an average ship power demand;
a step of performing control so as to charge the secondary battery with surplus power in a case where the ship power demand does not exceed a total output of the diesel generator and the organic Rankine cycle system; and
step of performing control so as to discharge the power stored in the secondary battery in a case where the ship power demand exceeds the total output of the diesel generator and the organic Rankine cycle system.
